Europäisches Patentamt

European Patent Office

Office européen des brevets

(19)

(11) Publication number: **0 089 214**
A1

## EUROPEAN PATENT APPLICATION

(21) Application number: 83301385.7

(22) Date of filing: 14.03.83

(51) Int. Cl.³: **F 24 F 5/00**
F 24 F 7/007, A 01 G 9/24
F 24 J 3/02

(30) Priority: 12.03.82 GB 8207252
02.04.82 GB 8209916
10.06.82 GB 8216893
09.09.82 GB 8225771
19.11.82 GB 8233062

(43) Date of publication of application:
21.09.83 Bulletin 83·38

(24) Designated Contracting States:
AT BE CH DE FR IT LI LU NL SE

(71) Applicant: Laserpark Limited
28, Bolton Street
London(GB)

(72) Inventor: Pidgeon, Michael
Glebe House, Church Lane Goodworth Clatford
Andover Hampshire(GB)

(72) Inventor: Dixon, Stuart
6, Kingsley Avenue
Wilmslow Cheshire(GB)

(74) Representative: Sturt, Clifford Mark et al,
MARKS & CLERK 57-60 Lincoln's Inn Fields
London WC2A 3LS(GB)

(54) Solar ventilators.

(57) A first aspect of this invention provides a ventilator comprising a motor (14), a fan (16) and a solar cell (12), the solar cell (12) being arranged to power the motor (14) which in turn drives the fan (16) when sufficient radiation impinges upon the solar cell (12). The ventilator can be used in greenhouses.

A second aspect of the present invention provides a solar powered air modifier comprising a motor (14), a fan (16), a solar cell (12) and means for housing a product to be dispersed by the modifier, the solar cell (12) being arranged to power the motor (14) so as to drive the fan (16) and disperse the product when suffcent radiation impinges upon the solar cell (12). The product to be dispersed can be an air freshener, an insecticide or similar product.

In a third aspect, the present invention provides a solar powered device consisting of at least a motor (14), a fan (16) and a solar power unit (12), the solar power unit (12) being arranged to power the motor for driving the fan (16), and further comprising an electric energy storage device which is connected to receive energy from the solar power unit (12) and which is connnectable to drive the fan (16).

A further aspect of the invention provides a valve actuator comprising a solar power unit (32), a motor (34) and a valve actuating member (48), the motor (34) being connected to an electrical supply from the solar power unit (32) and being operable to drive the valve actuating member (48) which is arranged to periodically open and close a valve.

Another aspect of the invention provides a head gear formed of a rigid or semi-rigid material including a ventilator comprising a motor (14), a fan (16) and a solar power unit (12), the solar power unit (12) being arranged to drive the motor (14) which in turn drives the fan (16) when sufficient radiation impinges upon the solar power unit (12), whereby the head gear is ventilated.

FIG.1.

## SOLAR VENTILATORS

The present invention relates to solar ventilators and includes a number of devices which are inventive and particularly beneficial developments of the basic inventive concept.

In certain forms of accommodation which may be left unattended for a period of time it is desirable that the air content of the accommodation should be regularly changed. Such a regular change of air helps to mitigate problems such as the formation of mould on the interior surfaces of the accommodation or on articles stored within the accommodation. Such problems are often associated with caravans and boats. A similar regular change of air is also desirable for greenhouses, but in this application the ventilation is required so as to prevent the greenhouse from overheating during sunny periods.

A device is known which attempts to provide the desired air change and which is specifically adapted for use in greenhouses. This device consists of an arrangement of telescopic poles which have a high coefficient of linear thermal expansion and which act between a solid frame and a ventilation flap of the greenhouse. As the temperature within the greenhouse increases the telescopic poles expand and the flap is opened. However, this known device is prone to malfunction in that the telescopic poles can easily become seized either with the ventilator flap open or closed. The effect of such malfunction upon the contents of the greenhouse can of course be disastrous.

One aspect of the present invention seeks to provide a form of ventilation which is suitable for the above discussed applications and which is reliable in operation.

According to a first aspect of the present invention there is provided a ventilator comprising a motor, a fan and a solar power unit, the solar power unit being arranged to power the motor which in turn drives the fan when sufficient radiation impinges upon the solar power unit.

This aspect of the present invention is simple in construction and reliable in operation and is found to be particularly suited to the described applications for a number of reasons.

Conventional air fresheners rely upon the slow evaporation of a substance or upon the use of an aerosol propellent. With the former, it is difficult to obtain the desired degree of fragrance and this can also be a problem with the latter as well. The use of an aerosol propellent is relatively expensive and can also introduce undesirable substances into the air in addition to the desired fragrance substance. Aerosols are dangerous if punctured or heated.

According to a second aspect of the present invention there is provided a solar powered air modifier comprising a motor, a fan, a solar power unit and means for housing a product to be dispersed by the modifier, the solar power unit being arranged to power the motor so as to drive the fan and disperse the product when sufficient radiation impinges upon the solar power unit.

This second aspect of the present invention avoids or mitigates these problems associated with conventional air fresheners. The solar powered air modifier is easily controlled by partially or completely preventing solar radiation reaching the collector surface of the solar power unit. The air modifier is therefore automatically "switched off" when stored in a dark cupboard.

According to a further aspect of the present invention there is provided a solar powered device consisting of at least a motor, a fan, and a solar power unit, the solar power unit being arranged to power the motor for driving the fan, and further comprising an electric energy storage device which is connected to received energy from the solar power unit and which is connectable to drive the fan.

The solar powered device of this third aspect of the invention may additionally include means for housing a product which is to be dispersed by motion of the fan, thereby constituting a solar powered air modifier.

Preferably, the solar powered unit is of sufficient capacity and is arranged to drive the fan and charge the storage device simultaneously.

Advantageously, the solar powered device of this aspect of the invention includes a control circuit

4

connected between the solar power unit and the storage device so as to regulate charging of the storage device and prevent overcharging thereof. The solar powered device also beneficially includes a control unit for sensing the power supplied from the solar power unit directly to the fan. The control unit effects power supply from the storage device to the fan when the power supplied to the fan directly from the solar power unit falls below a pre-set threshold.

According to a further aspect of the present invention there is provided a head gear formed of a rigid or semi-rigid material including a ventilator comprising a motor, a fan and a solar power unit, the solar power unit being arranged to drive the motor which in turn drives the fan when sufficient radiation impinges upon the solar power unit, whereby the head gear is ventilated.

This aspect of the invention is applicable to protective head gear such as a "hard hat" as used on a building or construction site or a crash helmet for a motor cyclist. Such head gear is normally provided internally with a harness, and the ventilator is preferably arranged within the head gear between the harness and the top of the head gear. The solar power unit can be lighter in weight than other power sources and can provide an automatic intermittent operation, both of which are considered to be advantageous features.

According to a further aspect of the present invention there is provided a valve actuator comprising a solar power unit, a motor and a valve actuating member, the motor being connected to an electrical supply from the solar power unit and being operable to drive the valve actuating member which is arranged to periodically open and close a valve.

Preferably, the solar power unit is connected to an electric energy storage device and the said electrical supply is selectively connected directly to the solar power unit and/or the electric energy storage device.

In a preferred embodiment, the valve actuator further comprises a fan which is connected so as to be powered by the said electrical supply and which is arranged to disperse substances released upon opening of the valve.

A particular application envisaged for this invention is use in combination with an aerosol dispenser, the valve of the dispenser being controlled by the valve actuating member.

The aerosol may be in the form of an air freshener product which is periodically released by action of the valve actuating member and the dispersal of which may be enhanced by the fan of the preferred embodiment.

Embodiments of the present invention will now be described by way of example only and with reference to the accompanying drawings, in which:

Figure 1 illustrates a partical vertical section through a solar ventilator, and

Figure 2 is a diagrammatic representation of a solar powered valve actuator in combination with an aerosol dispenser and including a fan.

The illustrated solar ventilator comprises a housing 10 which accommodates a solar cell 12, a motor 14 and a fan 16. The housing 10 is shown as being of unitary construction although the housing may in practice be assembled from several components. The housing 10 has a circular flange 18 which is used for fixing the ventilator in position in combination with an additional fixing element. Two additional fixings 20 and 22 are illustrated and these can be used as alternative arrangements.

The flange of the housing 18 is located on one side of a window, wall or the like and the relevant fixing member located on the opposite surface of the window, wall or the like. Where the fixing element 20 is used, the fixing element and the flange 18 may be secured together by means of bolts or self tapping screws etc. The fixing element 22 can be of a simple annular shape and can be secured to the ventilator 10 by means of an interference type fit so that the use of self tapping screws, bolts etc. is avoided in fixing the ventilator into position.

The housing 10 carries a conventional solar cell 12 in a recess on its external surface. The solar cell 12 may be bonded to the housing 10 for additional security. The solar cell 12 is coupled to a motor 14 which is accommodated within the housing 10 and which is held in position by bracing elements 24. The motor 14 includes a spindle 26 to which the fan 16 is attached.

When solar radiation impinges upon the solar cell 12 electric power is generated which is transferred to the motor 14 and when the incident solar radiation is sufficiently high the motor 14 drives the fan 16 by way of spindle 26. Air flows through the apertures 28 provided in the housing 10 and additional air flow passages are provided as and where necessary.

It will be readily appreciated that the housing 10 and fixing elements 20 and 22 can be readily formed in plastics materials using known techniques.

By reversing the electrical connections between the solar cell and the motor, the direction of flow of air directly driven by the fan can be reversed.

The illustrated solar ventilator is particularly useful when used in certain forms of accommodation which may be left unattended for a period of time. In such accommodation it is desirable that the air content of the accommodation should be regularly changed. Such a regular change of air helps to mitigate problems such as the formation of mould on the interior surfaces of the accommodation or on articles stored within the accommodation. Such problems are often associated with caravans and boats. A similar regular change of air is also desirable for greenhouses, but in this application the ventilation is required so as to prevent the greenhouse from overheating during sunny periods.

The solar ventilator is simple in construction and reliable in operation and is found to be particularly suited to the described applications for a number of reasons.

In particular, the solar ventilator tends to become inoperative whenever the weather produces rain since at such time the rain clouds tend to prevent sufficient radiation impinging upon the solar cell to drive the motor. Thus an ingress of heavily moist air through the ventilator tends to be prevented. It has been found that the annual total of hours of sunshine within countries such as the United Kingdom is remarkably stable. Consequently, it is possible to predict the average rate of change of air content effected by the ventilator over a period of time of say a month or two. This enables the optimum size of ventilator to be selected for the particular application. In medium strength sunlight it has been found possible to effect a complete change of air in a room of approximately 30 cubic metres in a period of six hours using a conventional solar cell of 7.5 centimetre diameter and a similarly sized fan. Much superior rates of change of air are possible when the size of solar cell employed is increased.

The application of the solar ventilator of this invention to greenhouses is beneficial. Similar to the described known device the ventilator will moderate the internal temperature of the greenhouse during sunny periods. However, unlike the known device, the present ventilator is reliable in operation and is not prone to components becoming seized due to thermal expansion. The components of the present ventilator can be formed of materials having low coefficient of thermal expansion.

A second aspect of the present invention provides a solar powered air modifier. Such an air modifier is based upon the above described solar ventilator with the addition of means for housing a product to be dispersed by the modifier. Rotation of the fan when sufficient radiation impinges upon the solar cell causes an air freshening product to be dispersed.

In one embodiment crystals of an air freshener product are contained in the housing which also accommodates the solar cell 12, motor 14 and fan 16. When sufficient radiation impinges upon the solar cell 12, the fan 16 blows air across the crystals and this results in a pleasant fragrance being emitted by the device.

Advantageously, the housing 10 can be provided with a stand and it is therefore readily located within a room adjacent a window through which the sun is shining. The air modifier can be operated by directing the light from a suitable lamp onto the solar cell 12.

The solar powered air modifier is particularly advantageous due to its simplicity, ease of manufacture, reliability, ease of use and the provision of a powered air modifier without the use of mains electricity, a battery power supply or an aerosol propellent.

The solar powered air modifier mitigates the problems of conventional air fresheners such as difficulty in controlling the rate of evaporation or the expense and dangers associated with using aerosol propellents.

The solar powered air modifier is easily controlled by partially or completely covering the solar cell 12 and is therefore automatically "switched off" when stored in a dark cupboard.

The means for housing the product to be dispersed can be a receptacle, the exact form of which will depend upon the product to be used. For use with crystals a small cage may be employed whereas for use of a liquid a dish is preferable. If a solid product is used to provide the required air modifying substance, then the product can be held by a series of projections or grooves in the housing 10 of the modifier, adjacent the fan 16. In one embodiment a band of solid material impregnated with an air freshening substance can be positioned within the housing 10 against the internal wall thereof so as to surround the fan 16. In this example the housing 10 is provided with a removable portion which enables ready insertion and replacement of the air freshening band.

Although described above with reference to an air freshener, the solar powered air modifier can be used in many other applications. It is particularly suitable for dispersing an insecticide in a greenhouse especially for the treatment of insects which are most prevalent in sunny weather. Similarly, the air modifier is particularly advantageous in mitigating obnoxious smells of certain types which become apparent in sunny weather.

A further aspect of the present invention provides a solar powered device consisting of at least a motor, a fan and a solar power unit, the solar power unit being arranged to power the motor for driving the fan, and further comprising an electric energy storage device which is connected to receive energy from the solar power unit and which is connectable to drive the fan.

The solar powered device may additionallly include means for housing a product which is to be dispersed by motion of the fan, thereby constituting a solar powered air modifier as described above.

Preferably, the solar power unit is of sufficient capacity and is arranged to drive the fan and charge the storage device simultaneously.

Advantageously, the solar powered device includes a control circuit connected between the solar power unit and the storage device so as to regulate charging of the storage device and prevent overcharging thereof. The solar powered device also beneficially includes a control unit for sensing the power supplied from the solar power unit directly to the fan and for effecting power supply from the storage device when the power supplied to the fan directly from the solar power unit falls below a pre-set threshold.

The solar powered device of this aspect of the invention has the additional advantages provided by operation during weak sunlight and at night. This is effected by the provision of a rechargeable battery which is connected to the solar power unit which drives the fan of the ventilator. The solar power unit comprises a number of solar cells one group of which is directly connected to drive the fan whilst the remaining group of solar cells is connected to charge the battery.

The ventilator includes a control circuit for regulating charging of the battery and preventing overcharge thereof. Such control circuits are well known. The ventilator also incorporates a control circuit for sensing the power supplied by the respective group of solar cells to the fan. When said power supplied to the fan falls below a threshold value, the battery is connected to the fan. Consequently, the fan continues to operate despite the fact that insufficient radiation is impinging upon the solar power unit to directly drive the fan. The solar ventialtor will therefore continue to operate during periods of weak sunlight, for example when clouds obscure

the sun, and at night.

Additional control features may be incorporated in the solar ventilator in accordance with the desired application. For example, a time delay may be incorporated so that power is not supplied from the battery immediately upon power from the solar power unit falling below the threshold. This arrangement will avoid discharging the battery, for example, during temporary cloud cover. The control circuits may additionally or alternatively include timing elements so that the fan is only driven, for example, for a specified time in each hour during which the fan is not directly driven by the solar power unit.

With the addition of means for housing a product to be dispersed by the fan, the above arrangement provides a solar powered air modifier having the same advantages as those described above in relation to the solar ventilator with the additional electric storage facility. The applications of the solar powered air modifier can be greatly extended and enhanced by the inclusion of the rechargeable battery particularly when used in combination with the above described control circuits. The timing control circuits are particularly advantageous where the air modifier is in the form of an air freshener which is used in an environment with a constant background odour, for example, in certain parts of hospitals. The air modifier will also greatly benefit from the inclusion of the rechargeable battery and control circuits when used for dispensing agricultural products such as fertilisers or pest control products. In such applications a regular dosage of the product may be highly desirable but which may be impractical with conventional power units.

Modern rechargeable batteries such as nickel-cadmium and lithium batteries enable the above described devices to require only the minimum of maintenance and will not significantly detract from the ease of manufacture and installation of the devices.

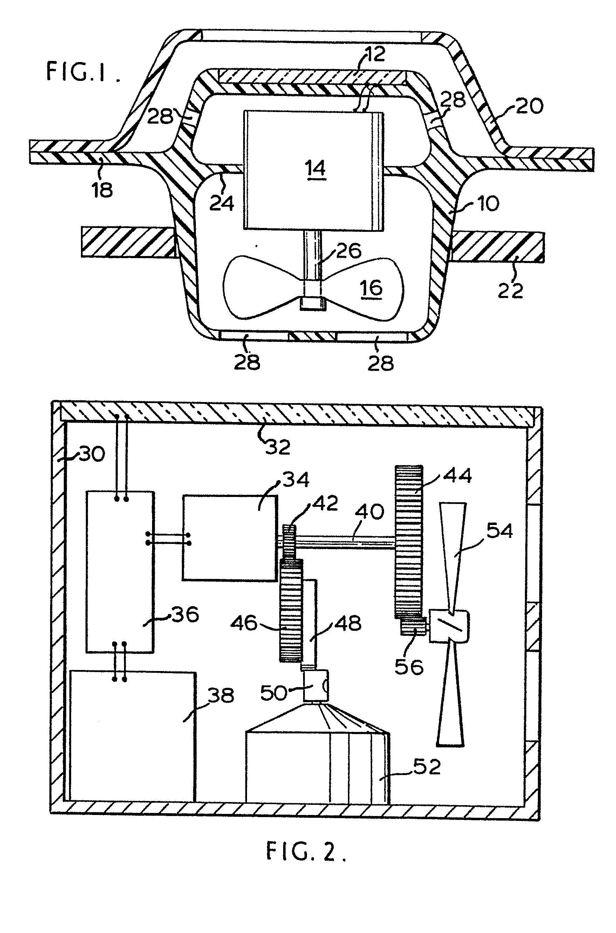

Figure 2 is a diagrammatic vertical section through a solar powered air freshening device. The device comprises a housing 30 which may be formed from a moulded plastics material. The housing 30 has a recessed upper surface which accommodates one or more solar cells 32. The device includes an electric motor 34 which is connected to an electrical supply control unit 36. The electrical supply control unit 36 is connected to the solar cell 32 and is also connected to a nickel cadmium storage cell 38. The motor 34 has an output shaft 40 which carries two gear wheels 42 and 44. The gear wheel 42 drives a valve actuating member 48 via a gear train represented by the cog 46. The valve actuating member 48 acts on the valve and nozzle release 50 of an aerosol dispenser 52. The valve actuating member 48 is illustrated as an eccentric cam attached to the cog 46.

When the output shaft 40 is driven by motor 34 the gear wheel 42 drives the gear train illustrated by cog

46 and the eccentric cam 48 depresses and releases the nozzle and valve 50. The nozzle and valve unit 50 is resiliently biased so that the valve of the aerosol dispenser is closed until the nozzle and valve unit 50 is depressed by the eccentric cam 48.

It will be readily apparent to those skilled in the art that implementation of the valve actuating member 48 is possible in a very large number of different permutations. The requirement is to translate the output of the motor 34 into a periodic opening and closing of the valve of the aerosol dispenser. For example, the use of a servo-system for operation of the nozzle and valve unit 50 is envisaged and is relatively easy to implement.

Electrical power generated by the solar power unit 32, which may consist of a number of solar cells, is fed into the electrical supply control unit 36. This unit is capable of supplying the output of the solar power unit 32 to the motor 34 via power limitating and stabilizing circuits. Time control circuits may also be included in the unit 36 so that output to the motor 34 can be controlled in accordance with a predetermined programme. The electrical supply control unit 36 is also connected to the nickel cadmium storage cell 38 and during times of high output from the solar power unit 32 the unit 36 causes the output from the solar power unit 32 to charge the storage cell 38. Charge protection circuits may be included in the unit 36 to avoid damage, for example by applying excessive charging rates, to the storage cell 38. The control unit 36 may also include a power sensing circuit arranged to detect the power transferred from the solar cell 32 to the motor 34. This circuit will ensure that power is supplied from the storage cell 38 to the motor 34 when the output from the solar power unit 32 is insufficient for the requirements for the motor 34. The described arrangement provides complete versatility for controlling the release of an aerosol product. The aerosol product can be released at set intervals which may vary in accordance with the time of day and the device becomes independent of the instantaneous power of radiation impinging upon the solar power unit 32 by virtue of provision of the storage cell 38.

The illustrated embodiment of the invention incorporates a fan 54 which is attached to a gear train illustrated as cog 56 which is driven by the gear wheel 44 of the output shaft 40 of motor 34. The fan 54 aids the dispersion of the aerosol product released by the valve actuating member 48 depressing the valve and nozzle unit 50. As indicated by the relative sizes of the gear trains 46 and 56 and the gear wheel 42 and 44, the fan 54 rotates at a much higher speed than the eccentric cam 48. The relative sizes of the gear wheels and trains are illustrative only and are not intended to illustrate any specific ratio of rotational speeds.

The fan 54 is specifically provided as an optional feature and it will be readily appreciated that the fan 54 need not be driven by the motor 34 but could be driven by an alternative motor which may derive its electrical supply from the control unit 36.

A further aspect of the present invention provides a head gear formed of a rigid or semi-rigid material including a ventilator comprising a motor, a fan and a solar power unit, the solar power unit being arranged to drive the motor which in turn drives the fan when sufficient radiation impinges upon the solar power unit, whereby the head gear is ventilated.

The head gear in which the ventilator is incorporated will generally be protective head gear, for example a "hard hat" as used on a building or construction site or a crash helmet for a motor cyclist. Such head gear is normally provided internally with a harness, and the ventilator may be suitably arranged within the head gear between the harness thereof and the top of the head gear.

The ventilator incorporated in the head gear may be in the form illustrated and described in the embodiment of figure 1. It is, however, envisaged that the housing 10 shown in figure 1 will often be part of the head gear itself. This is particularly the case when the head gear is formed from a moulded plastics material. The shape of the housing shown in figure 1 will be varied to better suit the style and application of the head gear. For example, for use in a crash helmet, air flow characteristics and avoidence of formations which may "catch" in an accident must be considered. A requirement for protective head gear is that the ventilator should not weaken the structure. These considerations suggest that the ventilator is most advantageously positioned rearward facing and towards the top of the head gear.

This aspect of the invention is particularly beneficial since the solar power unit will usually be lighter in weight than other forms of power source. This places less strain upon the wearer and facilitates balancing of the weight of the overall structure. The ventilator will have automatic intermittent operation in accordance with variations in incident radiation. Intermittent operation is considered preferable to continuous operation especially since the head gear will tend to be ventilated most when most heated by incident radiation. It will often be preferable to incorporate a filter together with the ventilator and this can easily by accomplished by using a snap fit arrangement to the housing of the ventilator. The filter may be either internal or external to the head gear but should be accessible for cleaning or replacement. The filter will be particularly advantageous for hard hats used on construction sites where there is usually much dust. In dusty conditions a special advantage of this invention will tend to operate. Namely, as the amount of dust in the air increase so the amount of radiation impinging on the solar cell decreases. This is due to both air borne concentration and deposit on the solar cell. Ingress of dusty air will be less than if the ventilator was in continuous operation. As explained with reference to figure 1 ingress of rain can also be expected to be minimized. It may also be desirable to include a known form of shutter arrangement within the ventilator so that air passage through the ventilator will only occur when the fan is in operation.

The use of such a shutter arrangement may also be desirable in the other described applications of the ventilator.

CLAIMS:

1.  A ventilator comprising a motor (14) and a fan (16) characterised by the provision of a solar power unit (12) which is arranged to power the motor (14) which in turn drives the fan (16) when sufficient radiation impinges upon the solar power unit (12).

2.  A ventilator as claimed in claim 1 characterised in that the motor (14) and the fan (16) are located within a housing (10) on the exterior of which the solar power unit (12) is located.

3.  An air modifier comprising a motor (14), a fan (16) and means for housing a product to be dispersed by the modifier, characterised by a solar power unit (12) which is arranged to power the motor (14) so as to drive the fan (16) and disperse the product when sufficient radiation impinges upon the solar power unit (12).

4.  An air modifier as claimed in claim 3, characterised in that the product to be dispersed is selected from the group consisting of; an air freshener, an insecticide and a an animal or plant treatment product.

5.  A solar powered device consisting of at least a motor (14), a fan (16) and a solar power unit (12), the solar power unit (12) being arranged to power the motor (14) for driving the fan (16), and further comprising an electric energy storage device which is connected to receive energy from the solar power unit (12) and which is connectable so as to drive the fan (16).

6.    A solar powered device as claimed in claim 5 characterised in that the solar power unit (12) is of sufficient capacity and is arranged to drive the fan (16) and charge the storage device simultaneously when the solar power unit (12) intercepts ambient solar radiation.

7.    A solar powered device as claimed in claim 5 or 6, characterised by a control circuit connected between the solar power unit (12) and the storage device so as to perform at least one function selected from the group consisting of;

regulating charging of the storage device and preventing overcharging thereof,

sensing the power supplied by the solar power unit (12) directly to the fan (16) and effecting power supply from the storage device when the power supplied to the fan (16) directly from the solar power unit (12) falls below a pre-set threshold, and

producing a time delay in operation of the fan (16).

8.    A valve actuator comprising a motor (34) and a valve actuating member (48) characterised by a solar power unit (32) which supplies electrical energy to the motor (34) so as to drive the valve actuating member (48) in order to periodically open and close a valve (50).

9.    A valve actuator as claimed in claim 8, characterised by a fan (54) which is connected so as to be powered by the solar power unit (32) and which is arranged to disperse substances released upon opening of the valve (50).

10. A head gear formed of a rigid or semi-rigid material including a ventilator characterised in that the ventilator comprises a motor (14), a fan (16) and a solar power unit (12), the solar power unit (12) being arranged to drive the motor (14) which in turn drives the fan (16) when sufficient radiation impinges upon the solar power unit (12), whereby the head gear is ventilated.

FIG.1.

FIG. 2.

0089214

1/1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 074 770 (THOMPSON) * Page 1, line 124 - page 2, line 8; page 2, lines 99-128 * | 1,2 | F 24 F 5/00<br>F 24 F 7/007<br>A 01 G 9/24<br>F 24 J 3/02 |

- - - - -

TECHNICAL FIELDS SEARCHED (Int. Cl. ³)

A 01 G 9/00
F 04 D 25/00
F 24 F 5/00
F 24 F 7/00
F 24 J 3/00

The present search report has been drawn up for all claims

| Place of search | Date of completion of the search | Examiner |
|---|---|---|
| BERLIN | 06-06-1983 | PIEPER C |